# EUROPEAN PATENT SPECIFICATION

(11) **EP 1 234 230 B1**
(45) Date of publication and mention of the grant of the patent: **03.09.2003**
(21) Application number: 00980873.4
(22) Date of filing: 29.11.2000
(51) Int. Cl.: G06F 9/00

(54) **THREAD-BASED METHODS AND SYSTEMS FOR USING THE IDLE PROCESSING POWER OF ONE OR MORE NETWORKED COMPUTERS TO SOLVE COMPLEX SCIENTIFIC PROBLEMS**
AUF PROGRAMMFÄDEN BASIERTES VERFAHREN UND SYSTEME ZUR VERWENDUNG DER FREIEN VERARBEITUNGSLEISTUNG EINES ODER MEHRERER VERNETZTEN RECHNER UM KOMPLIZIERTE WISSENSCHAFTLICHE PROBLEME ZU LÖSEN
PROCEDES ET SYSTEME BASES SUR DES UNITES D'EXECUTION UTILISANT LA PUISSANCE DE TRAITEMENT INFORMATIQUE EN VEILLE D'AU MOINS UN ORDINATEUR POUR RESOUDRE DES PROBLEMES SCIENTIFIQUES COMPLEXES

(30) Priority: 29.11.1999 US 167925 P
(43) Date of publication of application: 28.08.2002
(73) Proprietor: GLAXO GROUP LIMITED, Greenford, Middlesex UB6 0NN (GB)
(72) Inventor: KEEFER, Christopher E., GlaxoSmithKline, Research Triangle Park, NC 27709 (US); MURPHY, Stephane, Morrisville, NC 27560 (US); SIMPKINS, Joseph D., GlaxoSmithKline, Research Triangle Park, NC 27709 (US); YOUNG, Sidney Stanley, GlaxoSmihtKline, Research Triangle Park, NC 27709 (US)
(74) Representative: Giddings, Peter John
(86) International application number: US0032535
(87) International publication number: WO01038973

(56) References cited:
- US-A- 4 631 674
- HAMIDZADEH B ET AL: "Dynamic scheduling strategies for shared-memory multiprocessors" PROCEEDINGS OF THE 16TH INTERNATIONAL CONFERENCE ON DISTRIBUTED COMPUTING SYSTEMS (CAT. NO.96CB35954), PROCEEDINGS OF 16TH INTERNATIONAL CONFERENCE ON DISTRIBUTED COMPUTING SYSTEMS, HONG KONG, 27-30 MAY 1996, pages 208-215, XP002172160 1996, Los Alamitos, CA, USA, IEEE Comput. Soc. Press, USA ISBN: 0-8186-7399-0
- HAYES, BRIAN: "Collective Wisdom" AMERICAN SCIENTIST, vol. 86, no. 2, March 1998 (1998-03), pages 118-122, XP002172161
- SUBRAMANIAM S ET AL: "AFFINITY SCHEDULING OF UNBALANCED WORKLOADS" PROCEEDINGS OF THE SUPERCOMPUTING CONFERENCE,US,LOS ALAMITOS, IEEE COMP. SOC. PRESS, vol. CONF. 7, 14 November 1994 (1994-11-14), pages 214-226, XP000533896 ISBN: 0-8186-6607-2

## Description

### Technical Field

The present invention relates to methods and systems for using the idle processing power of one or more networked computers to solve complex scientific problems. More particularly, the present invention relates to thread-based methods and systems for using the idle processing power of one or more networked computers to solve complex scientific problems.

### Background Art

Many medium-to-large size enterprises have a large number of desktop computers that are connected via one or more networks. These computers are typically idle a great deal of the time. For example, such machines may be idle on nights, weekends, and while employees are otherwise engaged. A recent sampling indicates that desktop machines are being used less than 5% of the time. Servers are also typically idle over 90% of the time. In light of the unharnessed computing power of idle desktop machines, methods and systems have been developed to utilize this computing power to solve complex problems.

For example, U.S. Patent No. 6,112,225 to Kraft et al. discloses a task distribution processing system and method for subscribing computers to perform computing tasks during idle time. In the Kraft et al. system, peripheral computers are required to download an idle time activation program from a coordinating computer. The idle time activation program can include a screen saver that determines when the peripheral computer is idle based on processing load or a predetermined time period since the user has accessed the keyboard. Requiring users to download an idle time activation program is undesirable since it must be done for each computer that is desired to participate in the aggregate task. In addition, executing a program that measures processing load or time since keyboard access consumes machine cycles on the peripheral computers, thus wasting idle time that could otherwise be used to perform the aggregate task.

U.S. Patent No. 5,031,089 to Liu et al. discloses a dynamic resource allocation scheme for distributed heterogeneous computer systems. In Liu et al., a plurality of peer nodes include logic for calculating and saving a workload value that indicates the number of jobs in the node's queue. Each node has logic for transferring work to other peer nodes. Finally, each node has logic that operates at the completion of each job that checks the node's own workload value and polls all of the other peer nodes for their workload values. If the node's own workload is low and the other nodes' workloads are high, the checking node will pull work from another overloaded node. While the system in Liu et al. may achieve load balancing among peer computers, such a system may overburden the network connecting the peer nodes with traffic between peer nodes that are continuously trying to balance their loads. Such traffic could congest the network and would not be transparent to the user. Therefore, the system disclosed in Liu et al. may be undesirable in a network where the computers used to solve the distributed processing problem are also used by end users.

For example, in a large organization, such as a pharmaceutical manufacturing company, end users may utilize their computers for email, web browsing, document authoring, and other tasks. If one or more computers on the network connected to these computers are solving a complex scientific problem in which peer-based load balancing is used, the traffic required to implement peer-based load balancing may overburden the network and interfere with communications to and from computers that are not idle. Accordingly, the system disclosed in Liu et al. may only be suitable for distributed computers dedicated to solve a complex problem.

In light of the difficulties associated with conventional distributed computing algorithms, there exists a long-felt need for methods and systems for using the idle processing power of networked computers to solve complex problems in a way that minimizes the impact on the end user.

### Disclosure of the Invention

According to one aspect, the present invention includes an thread-based system for solving complex scientific problems. Such a system includes a client that pulls work from a server relating to a complex scientific task. More particularly, the client includes computer code for starting a first thread for pulling a job description from the server and a second thread for pulling data from the server. The client allows the operating system to automatically schedule execution of the first and second threads. The first and second threads are preferably idle threads. As used herein, the phrase "idle threads" refers to threads that are of lower priority than user threads. User threads are those threads which are scheduled by user programs, such as word processing programs, email programs, etc. The word "threads," as used herein, refers to threads of execution, which are running instances of a program.

The thread-based system according to embodiments of the present invention is preferably used by network computers to solve a complex scientific task. Because the code on the clients is executed automatically when the client operating system schedules an idle thread for execution, the impact on the user is minimized. In addition, as will be discussed in more detail below, such a system preferably works on a complex task that is divided into small parts, such that the data transmitted over the network to perform the task is minimized and the work performed by each client is maximized. Computationally-intensive tasks that may be performed by clients according to the present invention include, for example, determining the three-dimensional characteristics of molecules and determining other physical properties of molecules. In such a system, the clients may pull a molecule or a set of molecules from a collection accessible by the server. The clients may then perform the complex calculations required to determine the properties of the molecules. The clients then report the results of the computations back to the server. Because molecule representations are typically short, the data transmitted over the network is minimized. In addition, because the computations required to determine three-dimensional properties and other characteristics of molecules is computationally-intensive, the clients perform a large amount of work. Accordingly, the goals of minimizing network traffic and maximizing work by clients are achieved.

Accordingly, it is an object of the present invention to provide a method and system for using the idle processing power of one or more networked computers to solve a complex scientific problem that minimizes the impact on the user and the user's network.

Some of the objects of the invention having been stated hereinabove, other objects will be evident as the description proceeds, when taken in connection with the accompanying drawings as best described hereinbelow.

### Brief Description of the Drawings

Preferred embodiments of the invention will now be explained with reference to the accompanying drawings of which:
Figure 1 is a block diagram illustrating an exemplary operating environment for embodiments of the present invention;
Figure 2 is a schematic diagram of a thread-based system for solving complex scientific problems according to an embodiment of the present invention;
Figure 3 is a flow chart illustrating exemplary steps performed by a client in pulling a job from a server and performing the work required by the job using threads that are automatically scheduled by the operating system according to an embodiment of the present invention; and
Figure 4 is a block diagram illustrating the automatic scheduling of threads by an operating system, which is used by embodiments of the present invention to solve complex scientific problems.

### Detailed Description of the Invention

### Exemplary Operating Environment

Turning to the drawings, wherein like reference numerals refer to like elements, the invention is illustrated as being implemented in a suitable computing environment. Although not required, the invention will be described in the general context of computer-executable instructions, such as program modules, being executed by a personal computer. Generally, program modules include routines, programs, objects, components, data structures, etc. that perform particular tasks or implement particular abstract data types. Moreover, those skilled in the art will appreciate that the invention may be practiced with other computer system configurations, including handheld devices, multi-processor systems, microprocessor based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

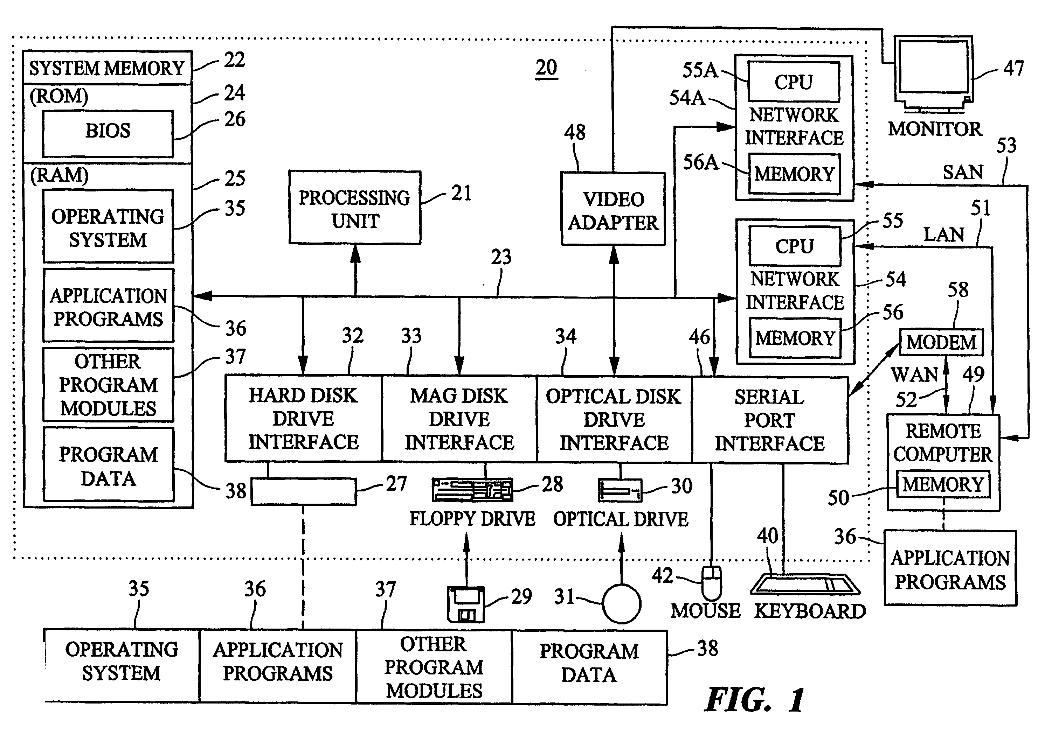

With reference to Figure 1, an exemplary system for implementing the invention includes a general purpose computing device in the form of a conventional personal computer **20,** including a processing unit **21,** a system memory **22,** and a system bus **23** that couples various system components including the system memory to the processing unit **21.** The system bus **23** may be any of several types of bus structures including a memory bus or memory controller, a peripheral bus, and a local bus using any of a variety of bus architectures. The system memory includes read only memory (ROM) **24** and random access memory (RAM) **25.** A basic input/output system (BIOS) **26,** containing the basic routines that help to transfer information between elements within the personal computer **20,** such as during start-up, is stored in ROM **24.** The personal computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** are connected to the system bus **23** by a hard disk drive interface **32,** a magnetic disk drive interface **33,** and an optical disk drive interface **34,** respectively. The drives and their associated computer-readable media provide nonvolatile storage of computer readable instructions, data structures, program modules and other data for the personal computer **20.** Although the exemplary environment described herein employs a hard disk, a removable magnetic disk **29,** and a removable optical disk **31,** it will be appreciated by those skilled in the art that other types of computer readable media which can store data that is accessible by a computer, such as magnetic cassettes, flash memory cards, digital video disks, Bernoulli cartridges, random access memories, read only memories, and the like may also be used in the exemplary operating environment.

A number of program modules may be stored on the hard disk, magnetic disk **29,** optical disk **31,** ROM **24** or RAM **25,** including an operating system **35,** one or more applications programs **36,** other program modules **37,** and program data **38.** The operating system **35** may include a thread scheduler that automatically schedules execution of threads in accordance with thread priority levels set by user programs. A user may enter commands and information into the personal computer **20** through input devices such as a keyboard **40** and a pointing device **42.** Other input devices (not shown) may include a microphone, touch panel, joystick, game pad, satellite dish, scanner, or the like. These and other input devices are often connected to the processing unit **21** through a serial port interface **46** that is coupled to the system bus, but may be connected by other interfaces, such as a parallel port, game port or a universal serial bus (USB). A monitor **47** or other type of display device is also connected to the system bus **23** via an interface, such as a video adapter **48.** In addition to the monitor, personal computers typically include other peripheral output devices, not shown, such as speakers and printers.

The personal computer **20** may operate in a networked environment using logical connections to one or more remote computers, such as a remote computer **49.** The remote computer **49** may be another personal computer, a server, a router, a network PC, a peer device or other common network node, and typically includes many or all of the elements described above relative to the personal computer **20,** although only a memory storage device **50** has been illustrated in Figure 1. The logical connections depicted in Figure 1 include a local area network (LAN) **51,** a wide area network (WAN) **52,** and a system area network (SAN) **53.** Local- and wide-area networking environments are commonplace in offices, enterprise-wide computer networks, intranets and the Internet.

System area networking environments are used to interconnect nodes within a distributed computing system, such as a cluster. For example, in the illustrated embodiment, the personal computer **20** may comprise a first node in a cluster and the remote computer **49** may comprise a second node in the cluster. In such an environment, it is preferable that the personal computer **20** and the remote computer **49** be under a common administrative domain. Thus, although the computer **49** is labeled "remote", the computer **49** may be in close physical proximity to the personal computer **20.**

When used in a LAN or SAN networking environment, the personal computer **20** is connected to the local network **51** or system network **53** through the network interface adapters **54** and **54a.** The network interface adapters **54** and **54a** may include processing units **55** and **55a** and one or more memory units **56** and **56a.**

When used in a WAN networking environment, the personal computer **20** typically includes a modem **58** or other means for establishing communications over the WAN **52.** The modem **58,** which may be internal or external, is connected to the system bus **23** via the serial port interface **46.** In a networked environment, program modules depicted relative to the personal computer **20,** or portions thereof, may be stored in the remote memory storage device. It will be appreciated that the network connections shown are exemplary and other means of establishing a communications link between the computers may be used.

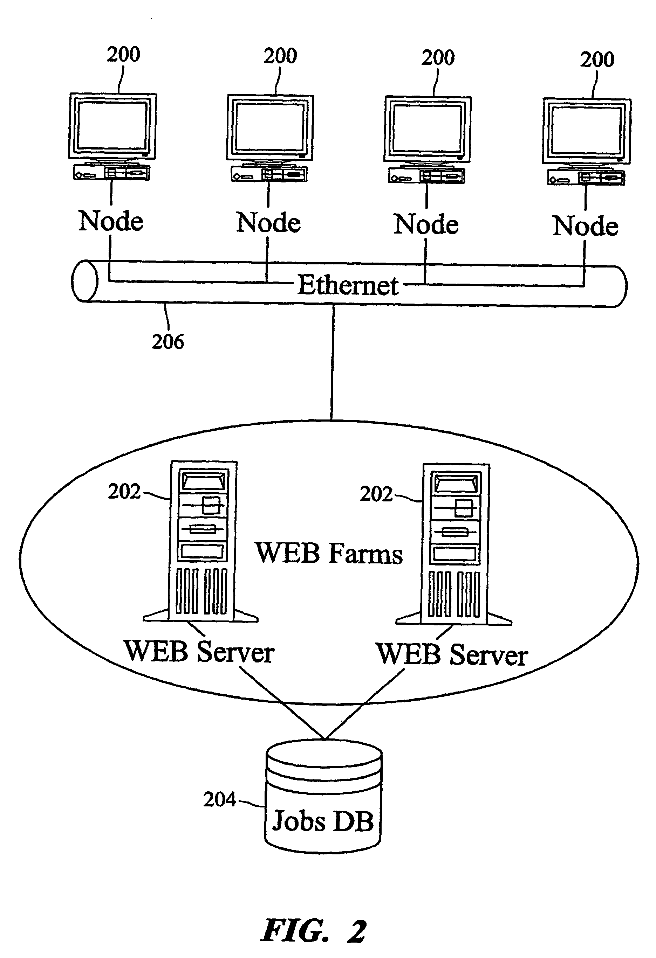

Figure 2 illustrates an thread-based system for solving complex scientific problems according to an embodiment of the present invention. In Figure 2, the system includes a plurality of client nodes **200,** server nodes **202,** and a jobs database **204.** Client nodes **200** and server nodes **202** may be similar in configuration to personal computer **20** illustrated in Figure 1. Jobs database **204** may also include a front-end computer that is similar to personal computer **20** illustrated in Figure 1. In the illustrated embodiment, client nodes **200** are connected via an Ethernet **206.** However, the present invention is not limited to interconnecting client nodes via an Ethernet. Any local area network technology can be used, for example, in an alternative embodiment, token ring or FDDI may be used.

Client nodes **200** each include computer-executable instructions for pulling work from server nodes **202** based on the scheduling of idle threads by the operating systems of client nodes **200.** Servers **202** may be conventional web servers that respond to hypertext transfer protocol (HTTP) GET requests from clients **200.** Web servers **202** may receive data from clients **200** via HTTP PUT requests.

The present invention is not limited to providing data and jobs to clients using web servers. For example, in an alternative embodiment of the invention, servers **202** may be file transfer protocol (FTP) servers. Because client nodes use protocols, such as FTP or HTTP, that are available though standard libraries, the complexity of the client programs is reduced.

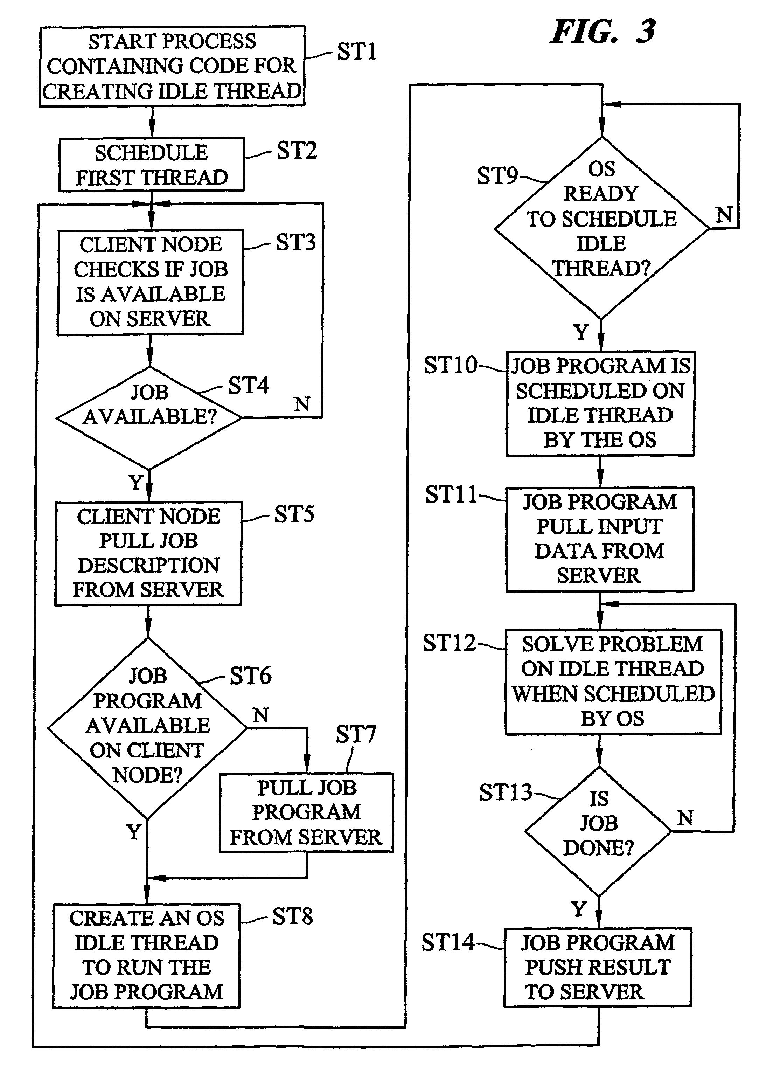

Figure 3 illustrates exemplary steps for implementing the process of the invention that may be performed by clients **200** in pulling jobs and data from servers **202.** Referring to Figure 3, in step **ST1**, a process is started containing code for creating a first idle thread. Such a process may be loaded onto a client node when the operating system is loaded on the client node. The process may be started automatically when the operating system starts. Because the code for pulling data from the server is scheduled on an idle thread, this thread will not be executed until all user priority threads are either executed or sleeping. An exemplary mechanism by which an operating system schedules threads will be discussed in more detail below.

In step **ST2,** the idle thread is scheduled for execution by the operating system. In step **ST3,** the client node queries the server to determine if any jobs are available. In step **ST4,** if jobs are not available, the client node continues checking as long as the thread is scheduled for execution. Once a user thread is scheduled or wakes up, the querying automatically ceases.

In step **ST4**, if the client node receives a response from the server indicating that a job is available, then in step **ST5,** the client node pulls a job description from the server. As discussed above, pulling a job description from the server may include sending an HTTP GET request to the server. In step **ST6,** the client node determines whether a job program performing the job specified by the job description is present on the client node. If the required program is not present, in step **ST7**, the client node pulls the job program from the server.

In step **ST8,** the client node creates an operating system idle thread to run the job program. This may be accomplished by the following lines of code which may be included in the main() function of the program executing on the first thread:
hRunningThread = CreateThread(NULL, 0, &RunningThreadProc, (void*)this,
CREATE_SUSPENDED, &IThreadID);
SetThreadPriority(hRunningThread, THREAD_PRIORITY_IDLE);
ResumeThread(hRunningThread);
In the code listed above, the commands are C++ commands that are particular to the WINDOWS® operating system. However, it will be apparent to those of ordinary skill in the art that similar commands can be used for other operating systems, such as UNIX-based operating systems. In the illustrated example, the CreateThread() function creates a thread to execute within the virtual address space of the calling process. The CreateThread() function is past a parameter that specifies the address of the function to be executed by the thread. In this example, this parameter is &RunningThreadProc. The SetThreadPriority sets the priority of the thread to idle. The ResumeThread() function decrements a thread suspend count. When the suspend count is decremented to 0, execution of the thread is resumed. The reason that the ResumeThread function is used is the fact that the thread was created in a suspended state in order to allow the priority to be set.

Once the job execution thread has been created, the thread is not executed until it is scheduled by the operating system. This is evinced by step **ST9** in Figure 3. In step **ST10,** once the operating system schedules the job execution thread, the job program is executed. In step **ST11**, the job program pulls input data from the server. Such an action may be accomplished by the problem specified by the job description and the input data is solved when the idle thread containing the job program is scheduled by the operating system. Solving of the problem continues until the job is done (step **ST13**) or until another higher-priority thread is scheduled. If a higher-priority thread is scheduled, the operating system saves the context of the idle thread, executes the higher-priority thread, and then returns to execution of the idle thread. In step **ST14,** once the job is done, the job program pushes the result to the server. This may be accomplished using an HTTP or FTP PUT request.

Although the embodiment illustrated in Figure 3 shows the scheduling of first and second idle threads by the operating system to perform a complex scientific task, the present invention is not limited to using two idle threads. For example, a single thread or more than two threads may be used. In addition, the threads need not be idle threads. All that is required for purposes of the present invention is that the threads be of lower priority than user threads to minimize the impact on user threads and that the threads be automatically scheduled by the operating system.

Thus, as illustrated in Figure 3, the present invention utilizes the automatic thread scheduling mechanism of the operating system to control the pulling of job data and programs from the server, the execution of the jobs, and the pushing of the results back to the server. Because the scheduling is accomplished using automatic scheduling procedures of the operating system, the impact on the user and the user's computer is minimized.

### Automatic Scheduling of Thread Execution by the Operating System

Because an important feature of the invention is allowing the operating system to automatically schedule the threads for pulling work from the server, a discussion of such automatic scheduling follows. The discussion that follows illustrates how the WINDOWS® NT operating system automatically schedules threads. However, as discussed above, the present invention is not limited to the WINDOWS® NT operating systems. Other operating systems, such as LINUX® or other UNIX-based operating systems, may be used. Any operating system that includes an automatic thread-scheduling mechanism that allows priorities to be set between threads may be used to implement the present invention.

In the WINDOWS® NT operating system, the microkernel schedules ready threads for processor time based upon their dynamic priority, a number from 1 to 31 which represents the importance of the task. The highest priority thread always runs on the processor, even if this requires that a lower-priority thread be interrupted. Priorities are organized in a hierarchy. Each level of the priority hierarchy establishes a range within which the lower level priorities can vary:
1-
   The base priority class of a process establishes a range for the base priority of the process and of its threads. The base priority classes are Idle, Normal, High, and Real-Time, each representing a numeric range of base priorities that sometimes overlap at the extremes. The base priority class is set in the application code. Exemplary application code that may be used to set the base priority class is as follows:
   SetPriorityClass(::GetCurrentProcess(), IDLE_PRIORITY_CLASS);
   SetThreadPriority(::GetCurrentThread(), THREAD_PRIORITY_IDLE);
   The operating system does not change the base priority class, but it does vary the base priority within the class to improve the response of processes to the user.
2-
   The base priority of a process varies within the range established by its base priority class. When a user interacts with a process (the process window is at the top of the WINDOWS® stack), WINDOWS® NT boosts the base priority of the process to maximize its response. The base priority of a thread is a function of the base priority of the process in which it runs. Except for Idle and Real-Time threads, the base priority of a thread varies only within +/-2 from the base priority of its process.
3-
   The dynamic priority of a thread is a function of its base priority. WINDOWS® NT continually adjusts the dynamic priority of threads within the range established by its base priority. This helps to optimize the system's response to users and to balance the needs of system services and other lower priority processes to run, however briefly.
The following table illustrates base priority classes and corresponding thread priorities:

| Base Priority Class | Thread Priority | Description |
|---|---|---|
| 31 | Real-time | Time critical |
| 26 | Real-time | Highest |
| 25 | Real-time | Above normal |
| 24 | Real-time | Normal |
| 23 | Real-time | Below normal |
| 22 | Real-time | Lowest |
| 16 | Real-time | Idle |
| 15 | Idle, Normal, or High | Time critical |
| 15 | High | Highest |
| 14 | High | Above normal |
| 13 | High | Normal |
| 12 | High | Below normal |
| 11 | High | Lowest |
| 10 | Normal | Highest |
| 9 | Normal | Above normal |
| 8 | Normal | Normal |
| 7 | Normal | Below normal |
| 6 | Normal | Lowest |
| 6 | Idle | Highest |
| 5 | Idle | Above Normal |
| 4 | Idle | Normal |
| 3 | Idle | Below normal |
| 2 | Idle | Lowest |
| 1 | Idle, Normal, or High | Idle |

### Context Switches

As discussed above, the scheduler maintains a queue of executable threads for each priority level. When a processor becomes available, the system performs a context switch. The steps in a context switch are:
- Save the context of the thread that just finished executing.
- Place the thread that just finished executing at the end of the queue for its priority.
- Find the highest priority queue that contains ready threads.
- Remove the thread at the head of the queue, load its context, and execute it.
The most common reasons for a context switch are:
- The time slice has elapsed.
- A thread with a higher priority has become ready to run.
- A running thread needs to wait.
- When a running thread needs to wait, it relinquishes the remainder of its time slice.

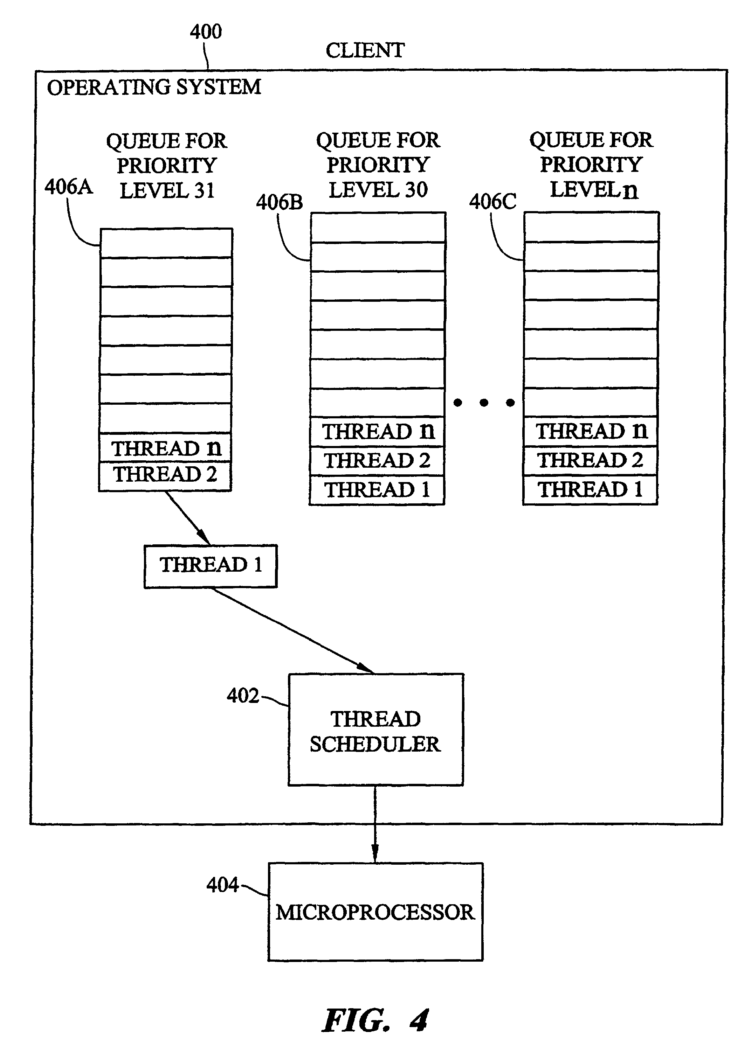

Figure 4 is a block diagram illustrating the thread scheduling that occurs on a client according to an embodiment of the present invention. In Figure 4, operating system **400** includes a thread scheduler **402** that schedules threads for execution on one or more microprocessors **404.** Thread scheduler **402** maintains a plurality of queues **406a-406n**. In the illustrated example, queue **406a** contains ready threads for priority level 31, which is the highest priority level in the WINDOWS® NT operating system. Queue **406b** contains threads for priority level 30, which is the next-to-highest priority level. Finally, queue **406n** contains threads for a lower priority level, such as idle threads. It is in queue **406n** where the programs for pulling job data from the server and executing job programs will reside.

As discussed above, thread scheduler **402** schedules threads from the higher priority queues before scheduling threads from the lower priority queues. In the illustrated example, thread scheduler **402** pulls thread **1** from the head of queue **406a** since this is the thread at the head of the highest priority queue. All of the threads in queues **406a** and **406b** will be executed before the threads in queue **406n**. Since user processes are scheduled on the higher priority threads, the programs for pulling job data from the server and executing the jobs will have minimal impact on the user.

### Scientific Applications

As discussed above, the thread-based methods and systems of the present invention for utilizing the idle processing power of one or more networked computers may be used to solve complex scientific problems. In solving such problems, the data sent over the network is preferably minimized and the computation performed by the clients is preferably maximized. One representative example of a scientific problem that embodiments of the present invention may be used to solve is determining three-dimensional conformations of molecules. For example, large pharmaceutical companies may have collections containing many thousands of molecules. For one computer to determine the three-dimensional properties of all of these molecules would tie up the computer for a year or more. Accordingly, it is desirable to divide this task among client computers. Referring back to Figure 2, a collection of molecules may be stored in jobs database **204**. Each molecule may be represented by a character string. Client nodes **200** may pull a single molecule or a subset of molecules from jobs database **204** via web servers **202.** Once the nodes **200** receive the molecule representations, the nodes **200** perform complex calculations for each molecule. The results are then sent back to web servers **202**. Because the processing of the collection of molecules can be distributed across multiple nodes using the idle processing capacity of those nodes, the time and expense required to perform such processing is reduced.

Another representative application for the thread-based methods and systems of the present invention includes computing properties of molecules in a collection of molecules. In such an example, client nodes **200** pull molecule descriptions from jobs database **204**. Client nodes **200** then execute programs for computing properties, such as molecular weight, distance between atoms, surface area or whether the molecule is capable of docking with a particular protein.

It will be understood that various details of the invention may be changed without departing from the scope of the invention. Furthermore, the foregoing description is for the purpose of illustration only, and not for the purpose of limitation―the invention being defined by the claims.

## Claims

1. A thread-based method for using the idle processing power of one or more networked computers to solve a complex problem, the method comprising:
(a) starting a thread on a client computer for pulling a job description relating to a sub-part of a complex problem from a server;
(b) allowing a thread-scheduler provided by an operating system executing on the client computer to automatically schedule execution of the thread; and
(c) in response to receiving data from the server, pulling job data from the server and solving the sub-part specified by the job description.

2. The method of claim 1 wherein pulling a job description relating to a sub-part of a complex problem from a server includes sending a hypertext transfer protocol (HTTP) GET request to a web server.

3. The method of claim 1 wherein pulling a job description relating to a sub-part of a complex problem from a server includes sending a file transfer protocol (FTP) GET request to an FTP server.

4. The method of claim 1 wherein starting the thread includes assigning a priority to the thread that is lower than a priority of any user thread.

5. The method of claim 4 wherein the thread scheduler schedules execution of the thread based on the priority assigned to the thread.

6. The method of claim 1 wherein the thread determines whether a job program specified in the job description is resident on the client computer and in response to determining that the job program is not resident on the client computer, the thread pulls the job program from the server computer.

7. The method of claim 6 wherein pulling the job program from the server computer includes sending a hypertext transfer protocol (HTTP) GET request to a web server.

8. The method of claim 6 wherein pulling the job program from the server includes sending a file transfer protocol (FTP) GET request to an FTP server.

9. The method of claim 1 wherein the complex problem includes computing properties of molecules in a collection and wherein pulling data from the server includes pulling a representation of a single molecule or representations of a subset of molecules from the collection.

10. The method of claim 9 wherein computing properties of molecules in the collection includes determining whether the molecules will dock with a predetermined protein.

11. The method of claim 9 wherein computing properties of molecules in the collection includes determining three-dimensional conformations of each molecule in the collection of molecules.

12. A thread-based system for utilizing the idle processing power of one or more computers connected via a network to solve a complex problem, the system comprising:
(a) a server including computer-executable instructions for storing data and job descriptions relating to a complex problem and for providing the data and the job descriptions to clients in response to requests from the clients; and
(b) a client including computer-executable instructions for starting a thread for pulling a job description from the server, for pulling data from the server, and for allowing an operating system to automatically schedule execution of the thread.

13. The system of claim 12 wherein the server comprises a hypertext transfer protocol (HTTP) server.

14. The system of claim 12 wherein the server comprises a file transfer protocol (FTP) server.

15. The system of claim 12 wherein the thread comprises an idle thread.

16. The system of claim 12 wherein the complex problem includes computing properties of molecules in a collection of molecules and the client is adapted to pull a representation of a single molecule or a subset of molecules from the collection at the server.

17. The system of claim 16 wherein computing properties of molecules in a collection of molecules includes determining three-dimensional conformations of each molecule in the collection of molecules.

18. The system of claim 16 wherein computing properties of molecules in a collection of molecules includes determining whether the molecules in the collection will dock with a predetermined protein.

19. A computer program product comprising computer-executable instructions embodied in a computer-readable medium for performing steps comprising:
(a) starting a thread on a client computer for pulling a job description relating to a sub-part of a complex problem from a server;
(b) allowing a thread-scheduler provided by an operating system executing on the client computer to automatically schedule execution of the thread; and
(c) in response to receiving data from the server, pulling job data from the server solving the sub-part specified by the job description.

20. The computer program product of claim 19 wherein pulling a job description relating to a sub-part of a complex problem from a server includes sending a hypertext transfer protocol (HTTP) GET request to a web server.

21. The computer program product of claim 19 wherein pulling a job description relating to a sub-part of a complex problem from a server includes sending a file transfer protocol (FTP) GET request to an FTP server.

22. The computer program product of claim 19 wherein starting the thread includes assigning a priority to the thread that is lower than a priority of any user thread.

23. The computer program product of claim 22 wherein the thread scheduler schedules execution of the thread based on the priority assigned to the thread.

24. The computer program product of claim 19 wherein the thread determines whether a job program specified in the job description is resident on the client computer and in response to determining that the job program is not resident on the client computer, the thread pulls the job program from the server computer.

25. The computer program product of claim 24 wherein pulling the job program from the server computer includes sending a hypertext transfer protocol (HTTP) GET request to a web server.

26. The computer program product of claim 24 wherein pulling the job program from the server includes sending a file transfer protocol (FTP) GET request to an FTP server.

27. The computer program product of claim 19 wherein the complex scientific problem includes computing properties of molecules in a collection and wherein pulling data from the server includes pulling a representation of a single molecule or representations of a subset of molecules from the collection.

28. The computer program product of claim 27 wherein computing properties of molecules in a collection includes determining three-dimensional conformations of each molecule in the collection.

29. The computer program product of claim 27 wherein computing properties of molecules in a collection includes determining whether the molecules will dock with a predetermined protein.

## Patentansprüche

1. Thread-basiertes Verfahren zum Ausnutzen der freien Rechenleistung eines oder mehrerer vernetzter Computer zum Lösen eines komplexen Problems, wobei das Verfahren die Schritte aufweist:
(a) Starten eines Threads auf einem Client-Computer zum Ziehen einer mit einem Teilbereich eines komplexen Problems in Beziehung stehenden Auftragsbeschreibung von einem Server;
(b) Ermöglichen, daß ein Thread-Scheduler, der durch ein Betriebssystem bereitgestellt wird, das auf dem Client-Computer ausgeführt wird, den Zeitablauf für die Ausführung des Threads automatisch plant; und
(c) Ziehen von Auftragsdaten vom Server und Lösen des durch die Auftragsbeschreibung spezifizierten Teilbereichs in Antwort auf vom Server empfangene Daten.

2. Verfahren nach Anspruch 1, wobei das Ziehen einer mit einem Teilbereich eines komplexen Problems in Beziehung stehenden Auftragsbeschreibung von einem Server das Übertragen einer Hypertext-Transfer-Protocol- (HTTP) GET-Anforderung an einen Web-Server aufweist.

3. Verfahren nach Anspruch 1, wobei das Ziehen einer mit einem Teilbereich eines komplexen Problems in Beziehung stehenden Auftragsbeschreibung von einem Server das Übertragen einer File-Transfer-Protocol- (FTP) GET-Anforderung an einen FTP-Server aufweist.

4. Verfahren nach Anspruch 1, wobei das Starten des Thread das Zuweisen einer Priorität zum Thread aufweist, die niedriger ist als eine Priorität eines Benutzer-Thread.

5. Verfahren nach Anspruch 4, wobei der Thread-Scheduler den Zeitablauf der Ausführung des Thread basierend auf der dem Thread zugewiesenen Priorität plant.

6. Verfahren nach Anspruch 1, wobei der Thread bestimmt, ob ein in der Auftragsbeschreibung spezifiziertes Auftragsprogramm auf dem Client-Computer resident ist, wobei der Thread, wenn festgestellt wird, daß das Auftragsprogramm nicht auf dem Client-Computer resident ist, das Auftragsprogramm vom Server-Computer zieht.

7. Verfahren nach Anspruch 6, wobei das Ziehen des Auftragsprogramms vom Server-Computer das Übertragen einer Hypertext-Transfer-Protocol- (HTTP) GET-Anforderung an einen Web-Server aufweist.

8. Verfahren nach Anspruch 6, wobei das Ziehen eines Auftragsprogramms vom Server-Computer das Übertragen einer File-Transfer-Protocol- (FTP) GET-Anforderung an einen FTP-Server aufweist.

9. Verfahren nach Anspruch 1, wobei das komplexe Problem das Berechnen von Eigenschaften von Molekülen in einer Molekülsammlung aufweist, und wobei das Ziehen von Daten vom Server das Ziehen einer Darstellung eines einzelnen Moleküls oder von Darstellungen eines Teilsatzes von Molekülen von der Molekülsammlung aufweist.

10. Verfahren nach Anspruch 9, wobei das Berechnen von Eigenschaften von Molekülen in der Molekülsammlung den Schritt aufweist: Bestimmen, ob die Moleküle an ein vorgegebenes Protein andocken werden.

11. Verfahren nach Anspruch 9, wobei das Berechnen von Eigenschaften von Molekülen in der Molekülsammlung das Bestimmen dreidimensionaler Strukturen jedes Moleküls in der Molekülsammlung aufweist.

12. Thread-basiertes System zum Ausnutzen der freien Rechenleistung eines oder mehrerer Computer, die über ein Netzwerk verbunden sind, zum Lösen eines komplexen Problems, wobei das System aufweist:
(a) einen Server mit durch einen Computer ausführbaren Befehlen zum Speichern von Daten und Auftragsbeschreibungen, die mit einem komplexen Problem in Beziehung stehen, und zum Bereitstellen der Daten und der Auftragsbeschreibungen für Clients in Antwort auf Anforderungen von den Clients; und
(b) einen Client mit durch einen Computer ausführbaren Befehlen zum Starten eines Thread zum Ziehen einer Auftragsbescheibung vom Server, zum Ziehen von Daten vom Server und zum Ermöglichen, daß ein Betriebssystem einen Zeitplan zum Ausführen des Threads automatisch plant.

13. System nach Anspruch 12, wobei der Server einen Hypertext-Transfer-Protocol- (HTTP) Server aufweist

14. System nach Anspruch 12, wobei der Server einen File-Transfer-Protocol- (FTP) Server aufweist.

15. System nach Anspruch 12, wobei der Thread ein freier Thread ist.

16. System nach Anspruch 12, wobei das komplexe Problem das Berechnen von Eigenschaften von Molekülen in einer Molekülsammlung aufweist und der Client dazu geeignet ist, eine Darstellung eines einzelnen Moleküls oder eines Teilsatzes von Molekülen von der Molekülsammlung am Server zu ziehen.

17. System nach Anspruch 16, wobei das Berechnen von Eigenschaften von Molekülen in einer Molekülsammlung das Bestimmen dreidimensionaler Strukturen jedes Moleküls in der Molekülsammlung aufweist.

18. System nach Anspruch 16, wobei das Berechnen von Eigenschaften von Molekülen in einer Molekülsammlung den Schritt aufweist: Bestimmen, ob die Moleküle in der Molekülsammlung an ein vorgegebenes Protein andocken werden.

19. Computerprogrammprodukt mit auf einem Computer ausführbaren Befehlen, wobei das Computerprogrammprodukt ein computerlesbares Medium ist, zum Ausführen der Schritte:
(a) Starten eines Threads auf einem Client-Computer zum Ziehen einer mit einem Teilbereich eines komplexen Problems in Beziehung stehenden Auftragsbeschreibung von einem Server;
(b) Ermöglichen, daß ein Thread-Scheduler, der durch ein Betriebssystem bereitgestellt wird, das auf dem Client-Computer ausgeführt wird, den Zeitablauf für die Ausführung des Thread automatisch plant; und
(c) Ziehen von Auftragsdaten vom Server und Lösen des durch die Auftragsbeschreibung spezifizierten Teilbereichs in Antwort auf vom Server empfangene Daten.

20. Computerprogrammprodukt nach Anspruch 19, wobei das Ziehen einer mit einem Teilbereich eines komplexen Problems in Beziehung stehenden Auftragsbeschreibung von einem Server das Übertragen einer Hypertext-Transfer-Protocol- (HTTP) GET-Anforderung an einen Web-Server aufweist.

21. Computerprogrammprodukt nach Anspruch 19, wobei das Ziehen einer mit einem Teilbereich eines komplexen Problems in Beziehung stehenden Auftragsbeschreibung von einem Server das Übertragen einer File-Transfer-Protocol- (FTP) GET-Anforderung an einen FTP-Server aufweist.

22. Computerprogrammprodukt nach Anspruch 19, wobei das Starten des Thread das Zuweisen einer Priorität zum Thread aufweist, die niedriger ist als eine Priorität eines Benutzer-Thread.

23. Computerprogrammprodukt nach Anspruch 22, wobei der Thread-Scheduler den Zeitablauf der Ausführung des Thread basierend auf der dem Thread zugewiesenen Priorität plant.

24. Computerprogrammprodukt nach Anspruch 19, wobei der Thread bestimmt, ob ein in der Auftragsbeschreibung spezifiziertes Auftragsprogramm auf dem Client-Computer resident ist, wobei der Thread, wenn festgestellt wird, daß das Auftragsprogramm nicht auf dem Client-Computer resident ist, das Auftragsprogramm vom Server-Computer zieht.

25. Computerprogrammprodukt nach Anspruch 24, wobei das Ziehen des Auftragsprogramms vom Server-Computer das Übertragen einer Hypertext-Transfer-Protocol- (HTTP) GET-Anforderung an einen Web-Server aufweist.

26. Computerprogrammprodukt nach Anspruch 24, wobei das Ziehen eines Auftragsprogramms vom Server das Übertragen einer File-Transfer-Protocol- (FTP) GET-Anforderung an einen FTP-Server aufweist.

27. Computerprogrammprodukt nach Anspruch 19, wobei das komplexe Problem das Berechnen von Eigenschaften von Molekülen in einer Molekülsammlung aufweist, und wobei das Ziehen von Daten vom Server das Ziehen einer Darstellung eines einzelnen Moleküls oder von Darstellungen eines Teilsatzes von Molekülen von der Molekülsammlung aufweist.

28. Computerprogrammprodukt nach Anspruch 27, wobei das Berechnen von Eigenschaften von Molekülen in einer Molekülsammlung das Bestimmen dreidimensionaler Strukturen jedes Moleküls in der Molekülsammlung aufweist.

29. Computerprogrammprodukt nach Anspruch 27, wobei das Berechnen von Eigenschaften von Molekülen in einer Molekülsammlung den Schritt aufweist: Bestimmen, ob die Moleküle an ein vorgegebenes Protein andocken werden.

## Revendications

1. Procédé basé sur des fils pour employer la puissance de traitement inutilisée d'un ou de plusieurs ordinateurs en réseau pour résoudre un problème complexe, le procédé comprenant les étapes suivantes :
(a) on fait démarrer un fil sur un ordinateur client pour tirer d'un serveur une description de travail concernant une partie fractionnaire d'un problème complexe;
(b) on permet à un ordonnanceur de fils, fourni par un système d'exploitation s'exécutant sur l'ordinateur client, d'ordonnancer automatiquement l'exécution du fil; et
(c) en réponse à la réception de données provenant du serveur, on tire du serveur des données de travail et on résout la partie fractionnaire spécifiée par la description de travail.

2. Procédé selon la revendication 1, dans lequel l'opération consistant à tirer d'un serveur une description de travail concernant une partie fractionnaire d'un problème complexe, comprend l'envoi à un serveur Web d'une requête GET du protocole "Hypertext Transfer Protocol" (HTTP).

3. Procédé selon la revendication 1, dans lequel l'opération consistant à tirer d'un serveur une description de travail concernant une partie fractionnaire d'un problème complexe comprend l'envoi à un serveur FTP d'une requête GET du protocole "File Transfer Protocol" (FTP).

4. Procédé selon la revendication 1, dans lequel l'opération consistant à faire démarrer le fil comprend l'assignation au fil d'une priorité qui est inférieure à une priorité d'un fil d'utilisateur quelconque.

5. Procédé selon la revendication 4, dans lequel l'ordonnanceur de fils ordonnance l'exécution du fil sur la base de la priorité assignée au fil.

6. Procédé selon la revendication 1, dans lequel le fil détermine si un programme de travail spécifié dans la description de travail réside dans l'ordinateur client, et en réponse à la détermination du fait que le programme de travail ne réside pas dans l'ordinateur client, le fil tire le programme de travail de l'ordinateur serveur.

7. Procédé selon la revendication 6, dans lequel l'opération consistant à tirer le programme de travail de l'ordinateur serveur comprend l'envoi à un serveur Web d'une requête GET du protocole "Hypertext Transfer Protocol" (HTTP).

8. Procédé selon la revendication 6, dans lequel l'opération consistant à tirer le programme de travail du serveur comprend l'envoi à un serveur FTP d'une requête GET du protocole "File Transfer Protocol" (FTP).

9. Procédé selon la revendication 1, dans lequel le problème complexe comprend le calcul de propriétés de molécules dans une collection, et dans lequel l'opération consistant à tirer des données du serveur comprend l'opération consistant à tirer de la collection une représentation d'une seule molécule ou des représentations d'un sous-ensemble de molécules.

10. Procédé selon la revendication 9, dans lequel le calcul de propriétés de molécules dans la collection comprend la détermination du fait que les molécules se lieront à une protéine prédéterminée.

11. Procédé selon la revendication 9, dans lequel le calcul de propriétés de molécules dans la collection comprend la détermination de conformations tridimensionnelles de chaque molécule dans la collection de molécules.

12. Système basé sur des fils pour employer la puissance de traitement inutilisée d'un ou de plusieurs ordinateurs connectés par l'intermédiaire d'un réseau, pour résoudre un problème complexe, le système comprenant :
(a) un serveur incluant des instructions exécutables par ordinateur pour stocker des données et des descriptions de travaux concernant un problème complexe, et pour fournir les données et les descriptions de travaux à des clients en réponse à des requêtes émises par les clients; et
(b) un client incluant des instructions exécutables par ordinateur pour faire démarrer un fil pour tirer une description de travail du serveur, pour tirer des données du serveur, et pour permettre à un système d'exploitation d'ordonnancer automatiquement l'exécution du fil.

13. Système selon la revendication 12, dans lequel le serveur est un serveur fonctionnant selon le protocole "Hypertext Transfer Protocol" (HTTP).

14. Système selon la revendication 12, dans lequel le serveur est un serveur fonctionnant selon le protocole "File Transfer Protocol" (FTP).

15. Système selon la revendication 12, dans lequel le fil est un fil inactif.

16. Système selon la revendication 12, dans lequel le problème complexe comprend le calcul de propriétés de molécules dans une collection de molécules, et le client est adapté pour tirer une représentation d'une seule molécule ou d'un sous-ensemble de molécules, de la collection se trouvant au serveur.

17. Système selon la revendication 16, dans lequel le calcul de propriétés de molécules dans une collection de molécules comprend la détermination de conformations tridimensionnelles de chaque molécule dans la collection de molécules.

18. Système selon la revendication 16, dans lequel le calcul de propriétés de molécules dans une collection de molécules comprend la détermination du fait que les molécules dans la collection se lieront ou non à une protéine prédéterminée.

19. Programme-produit d'ordinateur comprenant des instructions exécutables par ordinateur, incorporées dans un support lisible par ordinateur pour accomplir les étapes suivantes :
(a) on fait démarrer un fil sur un ordinateur client pour tirer d'un serveur une description de travail concernant une partie fractionnaire d'un problème complexe;
(b) on permet à un ordonnanceur de fils fourni par un système d'exploitation s'exécutant sur l'ordinateur client d'ordonnancer automatiquement l'exécution du fil; et
(c) en réponse à la réception de données à partir du serveur, on tire du serveur des données de travail résolvant la partie fractionnaire spécifiée par la description de travail.

20. Programme-produit d'ordinateur selon la revendication 19, dans lequel l'étape consistant à tirer d'un serveur une description de travail concernant une partie fractionnaire d'un problème complexe comprend l'envoi à un serveur Web d'une requête GET du protocole "Hypertext Transfer Protocol" (HTTP).

21. Programme-produit d'ordinateur selon la revendication 19, dans lequel l'étape consistant à tirer d'un serveur une description de travail concernant une partie fractionnaire d'un problème complexe comprend l'envoi à un serveur FTP d'une requête GET du protocole "File Transfer Protocol" (FTP).

22. Programme-produit d'ordinateur selon la revendication 19, dans lequel l'étape consistant à faire démarrer le fil comprend l'assignation au fil d'une priorité qui est inférieure à une priorité de n'importe quel fil d'utilisateur.

23. Programme-produit d'ordinateur selon la revendication 22, dans lequel l'ordonnanceur de fils ordonnance l'exécution du fil sur la base de la priorité assignée au fil.

24. Programme-produit d'ordinateur selon la revendication 19, dans lequel le fil détermine si un programme de travail spécifié dans la description de travail réside dans l'ordinateur client et, en réponse à la détermination du fait que le programme de travail ne réside pas dans l'ordinateur client, le fil tire le programme de travail de l'ordinateur serveur.

25. Programme-produit d'ordinateur selon la revendication 24, dans lequel l'étape consistant à tirer le programme de travail de l'ordinateur serveur comprend l'envoi à un serveur Web d'une requête GET du protocole "Hypertext Transfer Protocol" (HTTP).

26. Programme-produit d'ordinateur selon la revendication 24, dans lequel l'étape consistant à tirer le programme de travail du serveur comprend l'envoi à un serveur FTP d'une requête GET du protocole "File Transfer Protocol" (FTP).

27. Programme-produit d'ordinateur selon la revendication 19, dans lequel le problème scientifique complexe comprend le calcul de propriétés de molécules dans une collection, et dans lequel l'étape consistant à tirer des données du serveur comprend l'opération consistant à tirer de la collection une représentation d'une seule molécule ou des représentations d'un sous-ensemble de molécules.

28. Programme-produit d'ordinateur selon la revendication 27, dans lequel le calcul de propriétés de molécules dans une collection comprend la détermination de conformations tridimensionnelles de chaque molécule dans la collection.

29. Programme-produit d'ordinateur selon la revendication 27, dans lequel le calcul de propriétés de molécules dans une collection comprend la détermination du fait que les molécules se lieront ou non à une protéine prédéterminée.
